# EUROPEAN PATENT APPLICATION

(11) **EP 4 661 257 A1**
(43) Date of publication of application: **10.12.2025**
(21) Application number: 24180206.5
(22) Date of filing: 05.06.2024
(51) Int. Cl.: H02K 7/18, H02K 3/24, H02K 9/08

(54) **STATOR FOR SYNCHRONOUS MACHINE AND SYNCHRONOUS MACHINE**

(71) Applicant: Siemens Gamesa Renewable Energy A/S, 7330 Brande (DK)
(72) Inventor: Nilifard, Reza, 7400 Herning (DK); Azar, Ziad, Sheffield, S10 4ED (GB)
(74) Representative: SGRE-Association

(57) **Abstract**

It is described a stator (731) or stator segment (100, 200, 300) for a synchronous machine (730), in particular permanent magnet synchronous machine, comprising: plural lamination stacks (704_1, 704_2, 704_n) each extending in a circumferential direction (103) and radial direction (102) and each being composed of sheets stacked in the axial direction (101), the lamination stacks being arranged spaced apart in the axial direction, each lamination stack including a yoke portion (106) and plural tooth portions (107) protruding in the radial direction (102), a slot portion (108) being formed between each pair of adjacent tooth portions (107), wherein the slot portions of the plural lamination stacks are aligned in the circumferential direction such that plural slots (109) extending in the axial direction are formed, wherein axially between at least one, in particular each, pair of adjacent lamination stacks (704_1, 704_2, 704_n) a radially extending cooling fluid duct (405_1,..., 405_n) is formed; stator coils (420, 421) arranged in the plural slots according to a concentrated winding topology such that a first coil portion (110), in particular of a first coil, and a second coil portion (111), in particular of a second coil, are arranged in each slot (109), wherein the first and second coil portions (110, 111) are arranged in at least one, in particular in each, slot such as to provide an inter coil cooling fluid passage (112) circumferentially between the two coil portions (110, 111).

## Description

### Field of invention

The present invention relates to a stator or stator segment for a synchronous machine, further relates to a permanent magnet synchronous machine and still further relates to a wind turbine.

### Art Background

In a direct drive permanent magnet (PM) generator, higher torque density results in a higher wind turbine (WT) output power but on the other hand, it can also result in higher temperatures due to further losses generated in the stator copper. In high torque, low speed PM generator, the stator windings accounts for most losses. Therefore, any extra increase of output in the generators is mainly limited by the temperature of stator windings.

Due to winding configuration in concentrated winding generator (CW), i.e. two coil sides per slot, the stator winding temperature is significantly higher than distributed winding (DW) generator. So, the increase of cooling system performance would have a considerable impact on the maximum output from CW generator (result in increase of Annual Energy Production (AEP) and insulation lifetime). Furthermore, higher winding temperatures reduce the generator component lifespan and result in lower generator efficiency and reliability. The mitigation of winding temperature in concentrated winding generator is the subject of this application.

In a conventional stator or permanent magnet machine comprising a cooling system, it has been observed that relatively high temperature of the windings may impair the performance and interfere with efficient operation of the generator.

Until now, both DW and CW generators used in conventional wind turbines are using the forced air-cooling system. Cool air enters the generator from the NDE and DE sides, and after passing over the stator winding heads, it enters the axial gap between the rotor and the stator and is distributed between a number of radial air ducts in the stator body to remove heat.

However, the conventional cooling method cannot reduce the high winding temperature in the CW generator. Therefore, the CW generator experiences a higher temperature than the DW generator, and this problem can have a significant impact on AEP and lifetime of the winding insulation.

Thus, there may be a need for a stator or stator segment for a synchronous machine, for a synchronous machine and a wind turbine comprising the synchronous machine, wherein performance is improved and in particular wherein maximal temperatures of the windings can be reduced compared to conventional systems. Furthermore, an object of the present invention is to improve the performance of the generator in terms of power output, while satisfying temperature requirements of components of the generator, in particular the windings.

### Summary of the Invention

This need may be met by the subject matter according to the independent claims. Advantageous embodiments of the present invention are described by the dependent claims.

According to an embodiment of the present invention, it is provided a stator or stator segment for a synchronous machine, in particular permanent magnet synchronous machine, comprising: plural lamination stacks each extending in a circumferential direction and radial direction and each being composed of sheets stacked in the axial direction, the lamination stacks being arranged spaced apart in the axial direction, each lamination stack including a yoke portion and plural tooth portions protruding in the radial direction, a slot portion being formed between each pair of adjacent tooth portions, wherein the slot portions of the plural lamination stacks are aligned in the circumferential direction such that plural slots extending in the axial direction are formed, wherein axially between at least one, in particular each, pair of adjacent lamination stacks a radially extending cooling fluid duct is formed; stator coils arranged in the plural slots according to a concentrated winding topology such that a first coil portion, in particular of a first coil, and a second coil portion, in particular of a second coil, are arranged in each slot, wherein the first and second coil portions are arranged in at least one, in particular in each, slot such as to provide an inter coil cooling fluid passage (in particular extending axially) circumferentially between the two coil portions.

Either a (one segment) stator spanning a full circumference or a stator segment spanning an angle section of a full circumference may be provided or a stator spanning a full circumference composed of plural stator segments may be provided. The angle section may for example span 30°, 45°, 90°, 60° or 180°, for example.

The sheets of the lamination stacks may be manufactured from magnetically highly permeable material and may electrically be isolated from each other in the lamination stack. Depending on whether an entire stator or a stator segment is provided, the respective lamination stacks may extend across an entire circumference or an angle section of an entire circumference. The lamination stacks may be arranged spaced apart (in the axial direction) by providing spacer elements between adjacent stacks. The axial space between the lamination stacks may provide the space for the radially extending cooling fluid duct(s). Thus, spacers between the lamination stacks may only occupy a small fraction of the space between the adjacent lamination stacks and may thus only marginally interfere with the function of the radially extending cooling fluid duct(s).

The tooth portions may protrude in particular radially outwards (or inwards) from the yoke portion. The slot or slot portions have in a cross-sectional view (when viewed for example along the axial direction) a rectangular shape or a trapezoid shape depending on the application. Each slot (being composed from plural axially stacked slot portions) may accommodate a first coil portion and a second coil portion, which provide an inter coil cooling fluid passage circumferentially between the two coil portions. In each slot several windings or turns of a same coil portion may be present, may be arranged radially on top of each other for example. In particular, the first coil portion may belong to a first phase and the second coil portion may belong to a second phase, wherein the phases are the same or may be different.

The inter coil cooling fluid passage may be arranged circumferentially between the first and second coil portions in the sense that a center of the first coil portion is at a first circumferential position, a center of the second coil portion is at a second circumferential position, and a center of the inter coil cooling fluid passage is at a circumferential position between the first and the second circumferential position.

In particular, the first coil portion may comprise several turns of an electrical wire, wherein the turns go around a tooth (delimiting the slot on one circumferential side) several times in order to form a (first) coil around the tooth. The plural turns may be arranged radially on top of each other and/or circumferentially on top of each other. The second coil portion may comprise several turns of an electrical wire, wherein the turns go around another tooth (delimiting the slot on another circumferential side) several times in order to form a (second) coil around the other tooth.

The first coil portion is a portion of a (first) coil wound around the tooth adjacent to the slot, which first coil portion is situated within the slot. The second coil portion is a portion of a (second) coil wound around the other tooth delimiting the slot at the other circumferential side. The first coil may be associated with a same or a different phase than the second coil. Each, the first coil and the second coil may be formed by one or more turns of a winding or electrical wire around the respective tooth, wherein the turns may form different layers in the radial direction and/or the circumferential direction. For example, the first/second coil may be formed by two layers of windings in the circumferential direction and multiple layers for example between 15 and 35 layers in the radial direction. Other configurations are possible.

The radially extending cooling fluid ducts may be at least partially delimited or entirely be delimited by material of the lamination stacks, while the inter coil cooling fluid passages may substantially delimited by respective edges of the first coil portion and the second coil portion. A maximal separation between edges of the first coil portion and the second coil portion limiting the inter coil cooling fluid passages may for example amount to between 2 mm and 10 mm for example in the circumferential direction. Other values are possible.

Thereby, advantageously cooling fluid, for example compressed air, may be guided into and through the inter cooling fluid passages in order to absorb heat from the respective first coil and second coil or first coil portion and second coil portion. Cooling fluid may be guided to flow through or within the inter coil cooling passages as well as in the radially extending cooling fluid ducts in a synergistic manner. For example, cooling fluid may first be guided through one or more of the inter coil cooling fluid passages and guided through the radially extending cooling fluid duct, potentially via passage through an air gap between the stator and a rotor. This may depend on the particular configuration of the first coil portion and the second coil portion, for example the geometric relative arrangement and/or geometric constitution.

The stator (segment) may for example comprise furthermore a compressor or a fan for driving the cooling fluid through the inter coil cooling fluid passage(s) and/or the radially extending cooling fluid duct(s). The cooling fluid may for example comprise a fluid in a gaseous state, for example air, in particular compressed air.

By providing the inter coil cooling fluid passages, in particular in combination with the radially extending cooling fluid ducts (formed within the lamination stacks), an efficient cooling of the coils and thus the entire stator may be achieved. Thereby, the efficiency during operation of the generator and the synchronous machine may be improved. The synchronous machine may in particular be configured as an electrical generator in particular a generator for a wind turbine.

In particular the teeth of the stator may protrude radially outwards and the rotor if present may be an outer rotor.

According to an embodiment of the present invention, cooling fluid, in particular axially, guided within the inter coil cooling fluid passage comes into direct contact with axially extending first edges of the first and second coil portions for absorbing heat.

When the cooling fluid comes into direct contact with axially extending first edges of the first and second coil portions, heat may effectively be at least partially transferred from the coils to the cooling fluid for cooling the coils.

According to an embodiment of the present invention, the first and second coil portions are arranged in the slot such that the first edges of the first and second coil portions partially delimiting the inter coil cooling fluid passage are parallel or inclined relative to each other, in particular according to an A-shape or a V-shape.

The first edges of the first coil portion and the second coil portion may be formed by one or more of plural windings of an electrical conductor which are layered on top of each other in the radial direction and/or circumferential direction as mentioned above. When the first edges are parallel to each other, they are spaced apart by a distance which substantially does not vary along the radial direction. If the first edges are inclined (not parallel) relative to each other, the relative distance of the edges may vary depending on the radial position such as to increase radially outwards or to decrease radially outwards. Thereby several applications or applicational needs may be met and flexibility may be improved.

According to an embodiment of the present invention, the first and second coil portions have substantially rectangular cross-sectional shape, wherein the first and second coil portions are substantially parallel to each other or inclined relative to each other, in particular according to an A-shape or a V-shape.

Depending on the layer configuration or design of the first and second coil portions there may be a deviation from an exact rectangular or trapezoid cross-sectional shape. In case of a multi-turn coil, the first coil portion and the second coil portion may be composed of substantially the same number of windings or turns of an electrical conductor which is wound in a same or similar configuration regarding layers in the circumferential and/or radial direction. In the A-shape configuration, the first coil portion and the second coil portion have a smaller distance (circumferential distance) from each other radially outwards than radially inwards. For the V-shape configuration of the winding topology of the first and second coil portion design the distance between the first coil portion and the second coil portion may be larger radially outwards than radially inwards. Thereby flexibility is enabled while cooling performance can be maintained.

According to an embodiment of the present invention, the slot has in cross-section a rectangular shape or a trapezoid shape, wherein edges of the teeth delimiting the slot come in direct contact with axially extending second edges of the first and second coil portions.

The slot shape may for example be chosen depending on whether the A-shape or the V-shape configuration of the first and second coil portions is provided. For example, when the parallel configuration of the first and second coil portions is provided, the slot may substantially have a rectangular (parallel tooth edges) shape. When the A-shape or the V-shape configuration or geometry of the first and second coil portions is provided, the slot may have a cross-sectional shape of a trapezoid (non-parallel tooth edges) having the larger circumferential width at the radially inner side for the A-shape and at the radially outer side for the V-shape for example.

According to an embodiment of the present invention, the stator segment further comprises an axially extending coil portion cover arranged at edges of the first and second coil portions facing an air gap between the stator and a rotor.

The coil portion cover may provide a protection of the respective coil portions and may for particular configurations also prohibit cooling fluid passage from the inter coil space for example into an air gap between the stator and a rotor (in particular for the parallel and the A-shaped coil configuration). The coil portion cover may or may not have any openings.

According to an embodiment of the present invention for the parallel and the A-shape configurations of the first and second coil portions, the coil portion cover prohibits passage of a cooling fluid through the coil portion cover, in order to avoid fluid communication between the inter coil cooling fluid passage and the air gap.

For the parallel and the A-shape configuration of the first and second coil portions, it may be advantageous to prohibit the passage of cooling fluid through the coil portion cover and instead to guide the cooling air (in particular radially inwards) to and via the radially extending cooling ducts for example to a heat exchanger for carrying heat or heat energy away from the coils for improving cooling efficiency.

The cover openings in case of the V-shape configuration thereby may allow that cooling fluid after having at least partially passed through the inter coil cooling fluid passage to pass through the openings or the cover openings in particular into an air gap between the stator and the rotor, because in the V-shape configuration, the cooling air cannot be guided radially inwards, since in the V-shape configuration the first and second coil portions may be very close to each other or may even in contact or touch each other at the radially inner end of the respective coils such that cooling fluid passage is not possible or only hardly possible. The cover openings may have shape or geometry depending on the particular application. The axial spacing of the cover openings may be adapted to the particular application and may in particular be adapted in correspondence to relative axial spacings of the radially extending cooling fluid ducts in order to improve an intended flow geometry of the cooling fluid.

According to an embodiment of the present invention, the stator segment further comprises a support frame connected to respective yoke portions of the lamination stacks for supporting and fixing the plural lamination stacks.

The support frame may be in particular situated in a radially inner region of the stator while the lamination stacks may be connected or mounted, in particular bolted or welded, to the support frame to protrude radially outwards. The support frame may provide rigidity and mechanical strength of the stator. It may not be composed of solid continuous material but may be constructed as a scaffold or skeleton or framework providing mechanical rigidity but do not substantially interfering with cooling fluid flow. The support frame may cover or interfere with for example between 5 to 10% and 25% of the radially extending cooling ducts and may block only a relatively small fraction of the radially extending cooling ducts.

According to an embodiment of the present invention, the stator segment further comprises a cooling fluid driving and guiding system, in particular providing a closed cooling fluid loop, adapted: to guide cooling fluid from at least one axial end, in particular form both axial ends, of the stator into each inter coil cooling fluid passage and in particular into a region radially outwards from the protruding end of the teeth, where in particular an air gap between the stator and a rotor is to be formed, to allow the cooling fluid to pass axially through each inter coil cooling fluid passage and partly through the radially extending cooling fluid ducts, and/or to allow the cooling fluid to pass axially through the air gap and partly through the radially extending cooling fluid ducts.

The cooling fluid driving and guiding system may comprise at least one fan and/or a compressor for providing a suction force or a pressing force to the cooling fluid. The guiding system may comprise a piping system leading for example from a fan or compressor to axial ends of the stator at which the cooling fluid may be introduced (after having passed a heat exchanger). Thus, the cooling fluid may be introduced along an axial or substantially axial direction. Thereby, effective cooling may be achieved.

According to an embodiment of the present invention, for the parallel and the A-shape configurations of the first and second coil portions: a first cooling fluid portion is guided to and partially through the air gap, parts of the first cooling fluid portion are guided through the radially extending cooling fluid ducts, in particular radially inwards, a second cooling fluid portion is guided to and partially through the inter coil cooling fluid passage, parts of the second cooling fluid portion are guided through the radially extending cooling fluid ducts, in particular radially inwards.

According to an embodiment of the present invention, for the V-shape configurations of the first and second coil portions: a first cooling fluid portion is guided to and partially through the air gap, parts of the first cooling fluid portion are guided through the radially extending cooling fluid ducts, in particular radially inwards, a second cooling fluid portion is guided to and partially through the inter coil cooling fluid passage, parts of the second cooling fluid portion are guided to the air gap and from there through the radially extending cooling fluid ducts, in particular radially inwards.

Thus, depending on the configuration of the first and second coil portions, the cooling fluid path may be different. Thus, the cooling methodology may be applied to differently configured coil designs.

According to an embodiment of the present invention, the stator or the stator segment further comprises a heat exchanger, configured to partially absorb heat from the cooling fluid flowing out of the radially extending cooling fluid ducts, in particular radially inwards.

The heat exchanger may absorb or receive heat energy from the heated cooling fluid and may thus cool the cooling fluid which may then again be supplied to the inter coil cooling passages and/or the radially extending cooling ducts for cooling the generator. The heat exchanger may for example release the heat energy to atmospheric air for example.

The stator segment or stator may be configured for at least one of: closed loop cooling, in which case it further comprises a heat exchanger, configured to partially absorb heat from the cooling fluid flowing out of the radially extending cooling fluid ducts, in particular radially inwards; open loop cooling, in which case it further comprises cooling fluid piping configured to guide cooling fluid having absorbed heat from the stator to the environment, wherein in particular no heat exchanger is provided.

According to an embodiment of the present invention, it is provided a permanent magnet synchronous machine, comprising: a stator or plural stator segments according to one of the preceding embodiments, to form a stator in the entire circumference; a rotor, in particular radially outer rotor, rotatably supported relative to the stator; wherein a circumferentially and axially extending radial air gap is formed radially between the stator and the rotor, wherein in particular the inter coil cooling fluid passage is in communication with the air gap for the V-shape of the first and second coil portions or wherein in particular the inter coil cooling fluid passage is not in communication with the air gap for the A-shape or the parallel configuration of the first and second coil portions.

According to an embodiment of the present invention, it is provided a wind turbine, comprising: a permanent magnet synchronous machine according to the preceding embodiment; a hub with plural rotor blade, the hub being coupled to the rotor or the machine.

The wind turbine may be a direct drive wind turbine wherein for example between a hub at which the rotor blades are connected and the generator rotor no gearbox is provided or present.

The aspects defined above and further aspects of the present invention are apparent from the examples of embodiment to be described hereinafter and are explained with reference to the examples of embodiment. The invention will be described in more detail hereinafter with reference to examples of embodiment but to which the invention is not limited.

### Brief Description of the Drawings

Embodiments of the present invention are now described with reference to the accompanying drawings. The invention is not restricted to the illustrated or described embodiments.
Figs. 1 to 3 schematically illustrate a stator segment according to embodiments of the present invention in a cross-sectional view;
Fig. 4 schematically illustrates a stator segment according to an embodiment of the present invention in a three-dimensional view;
Figs. 5 and 6 schematically illustrate the stator segment illustrated in Fig. 4 from one axial end and in a cross-sectional view, respectively;
Fig. 7 schematically illustrates a cross-sectional view of a permanent magnet synchronous machine according to an embodiment of the present invention;
Figs. 8 and 9 schematically illustrate a portion of an electrical machine according to an embodiment of the present invention in a cross-sectional view and in a three-dimensional view, respectively;
Figs. 10, 11 and 12 schematically illustrate a portion of an electrical machine according to other embodiments of the present invention in a cross-sectional view and in a three-dimensional view, respectively;
Fig. 13 schematically illustrates a wind turbine according to an embodiment of the present invention.

### Detailed Description

The illustration in the drawings is in schematic form. It is noted that in different figures, elements similar or identical in structure and/or function are provided with the same reference signs or with reference signs, which differ only within the first digit. A description of an element not described in one embodiment may be taken from a description of this element with respect to another embodiment.

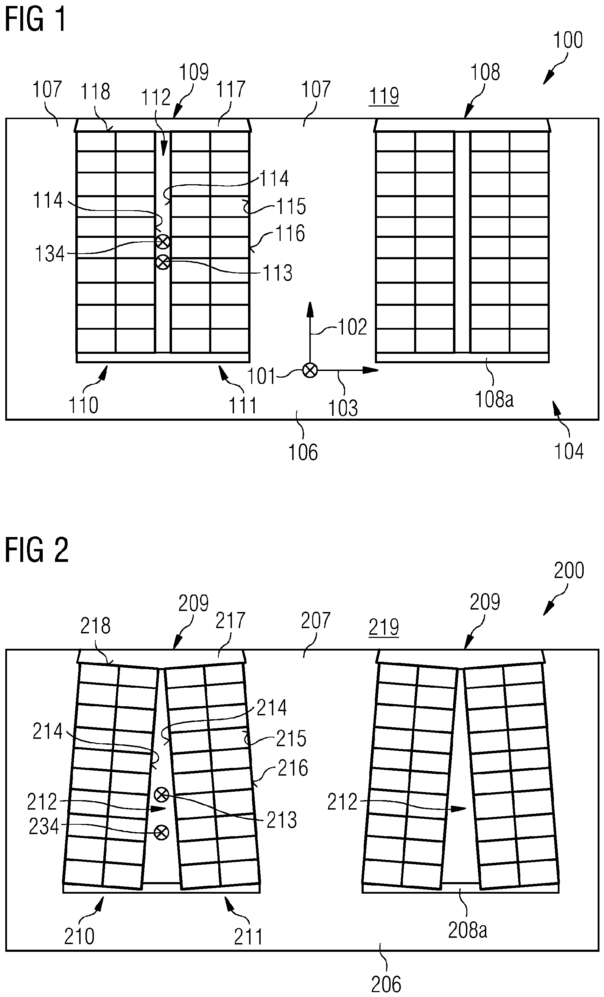

The stator segment 100 for a synchronous machine according to an embodiment of the present invention is illustrated in Fig. 1 in a cross-sectional view seen along an axial direction 101 which is perpendicular to a radial direction 102 and also perpendicular to a circumferential direction 103. In the cross-sectional view only one lamination stack 104 of plural lamination stacks is illustrated. Each of those lamination stacks 104 extends in the circumferential direction 103 and in the radial direction 102 and plural such lamination stacks are stacked in the axial direction 101.

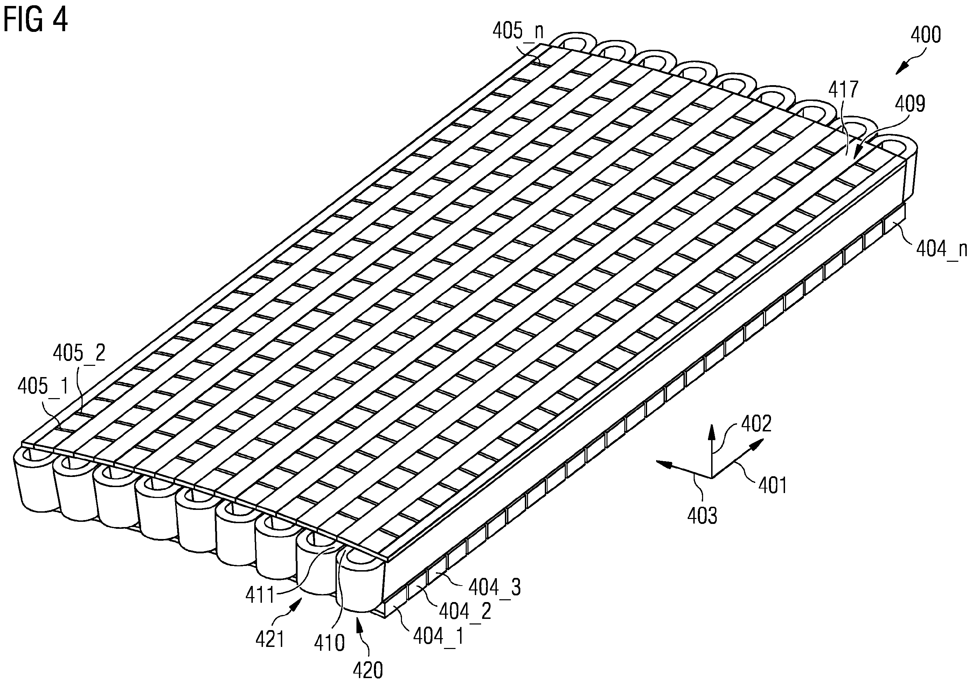

As can for example be seen in **Fig. 4** illustrating a three-dimensional view of a stator segment 400 according to an embodiment of the present invention, the lamination stacks 404_1, 404_2, ..., 404_n are stacked in the axial direction 401 and they are spaced apart from each other such that radially extending cooling fluid ducts 405_1, 405_2, ... 405_n are formed which will be explained further below.

Each lamination stack 104 as illustrated in Fig. 1 comprises a yoke portion 106, plural teeth portions 107 protruding in the radial direction 102, wherein a slot 108 portion (having slot bottom support 108a)is formed between each pair of adjacent tooth portions 107. The slot portions 108 of the plural lamination stacks, for example stacks 404_1, 404_2, ..., 404_n illustrated in Fig. 4 are aligned in the circumferential direction 103 such that plural slots 109 extending in the axial direction 101 are formed. As can be seen for example in Fig. 4, axially between at least one pair of adjacent lamination stacks (for example 404_1, 404_2) a radially extending cooling fluid duct (for example 405_1, 405_2, ... 405_n) is formed.

As can further be seen in Fig. 1, stator coils are arranged in the plural slots 109 such that a first coil portion 110 and a second coil portion 111 are arranged in each slot 109. Those first and second coil portions 110, 111 are arranged in the slot 109 to provide an inter coil cooling fluid passage 112 circumferentially between the two coil portions 110, 111. A cooling fluid 113 can be guided within the inter-winding cooling fluid passage 112 in the axial direction, as indicated in Fig. 1.

The cooling fluid 113 thereby comes into direct contact with axially extending first edges 114 of the first and second coil portions 110, 111 for absorbing heat. In the embodiment illustrated in Fig. 1, the first edges 114 of the first and second coil portions 110, 111 partly delimit the inter coil cooling fluid passage 112 and they are parallel to each other at least substantially parallel to each other.

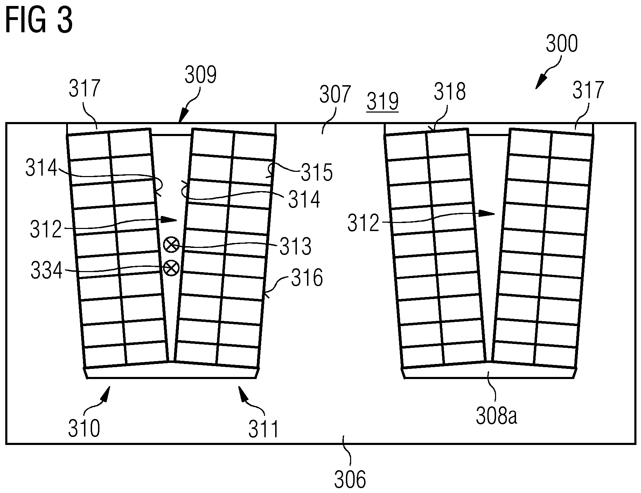

In the embodiments 200 and 300 of a stator segment illustrated in **Fig. 2** **and** **3** according to an embodiment of the present invention (showing a view as in Fig. 1) the respective first edges 214 and 314 of the first and second coil portions 210, 211 and 310, 311, respectively, are inclined relative to each other, in Fig. 2 in a A-shape and in Fig. 3 in a V-shape.

As can be appreciated from Figs. 1 to 3, the first and second coil portions 110, 111; 210, 211; 310, 311 have substantially a rectangular cross-sectional shape when viewed along the axial direction 101 and they are substantially parallel to each other (Fig. 1) or as the embodiments illustrated in Figs. 2 and 3 they are inclined relative to each other.

As can further be appreciated from Figs. 1, 2 and 3, the respective slot 109, 209, 309 has in cross-section a rectangular shape (in Fig. 1) or a trapezoid shape (in Figs. 2 and 3). It can further be appreciated from Fig. 1 that edges 115 of the tooth 107 delimiting the slot 109 come in direct contact with axially and radially extending second edges 116 of the first and second coil portions 110, 111. Similarly (see Fig. 2, 3), second edges 216, 316 of the first and second coil portions 210, 211; 310, 311 are in direct contact with edges 215, 315 of the tooth 207, 307 which delimit the slots 209, 309.

Figs. 1, 2, 3 further illustrate an axially extending coil portion cover 117, 217, 317, respectively which is arranged at edges 118, 218, 318 of the first and second coil portions 110, 111; 210, 211; 310, 311, respectively. The edges 118, 218, 318 facing an air gap 119, 219, 319 between the stator and a not illustrated rotor.

The already mentioned Fig. 4 illustrates in a three-dimensional view a stator segment 400 according to an embodiment of the present invention. The first coil portion 410 belongs to a first coil 420 and the second coil portion 411 belongs to a second coil 421. The coil portion cover 417 covers the coil portions 410, 411 which are arranged in the slot 409 and substantially occupy the slot 409, while an inter coil cooling fluid passage (not visible in Fig. 4) is circumferentially provided between the coil portions 410, 411. As can be appreciated from Fig. 4, the stator segment 400 has a curved shape. In this respect it is noted that for simplicity of illustration the stator portions 100, 200, 300 in Figs. 1, 2, 3 are illustrated in a straightened manner to provide a straight extension of the (in reality curved) circumferential direction 103.

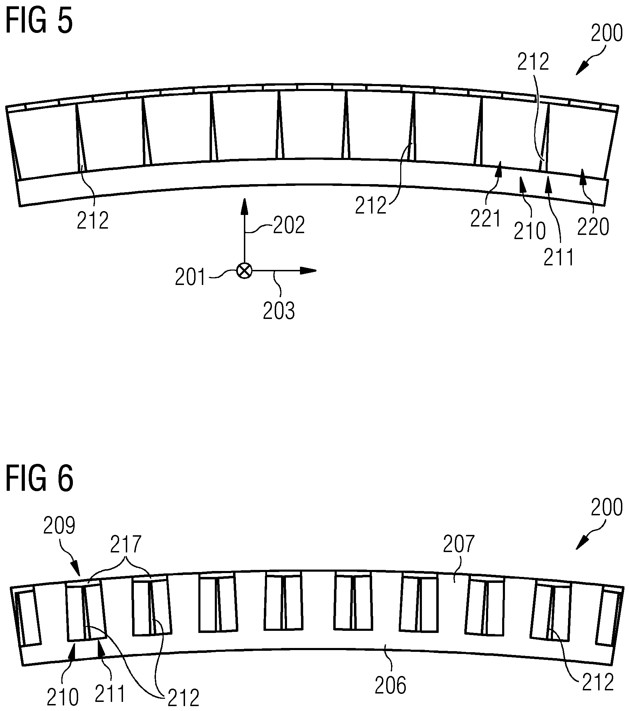

**Figs. 5 and 6** illustrate the stator segment 200 illustrated in Fig. 2 in a simplified three-dimensional view and in a cross-sectional view, respectively. For the parallel and the A-shape configurations of the first and second coil portions 110, 111; 210, 211 illustrated in Figs. 1 and 2 and also in Figs. 5 and 6, the winding coil portion cover 117, 217 prohibits passage of a cooling fluid 113 through the coil portion cover 117, 217, in order to avoid fluid communication between the inter coil cooling fluid passage 112, 212 and the air gap 119.

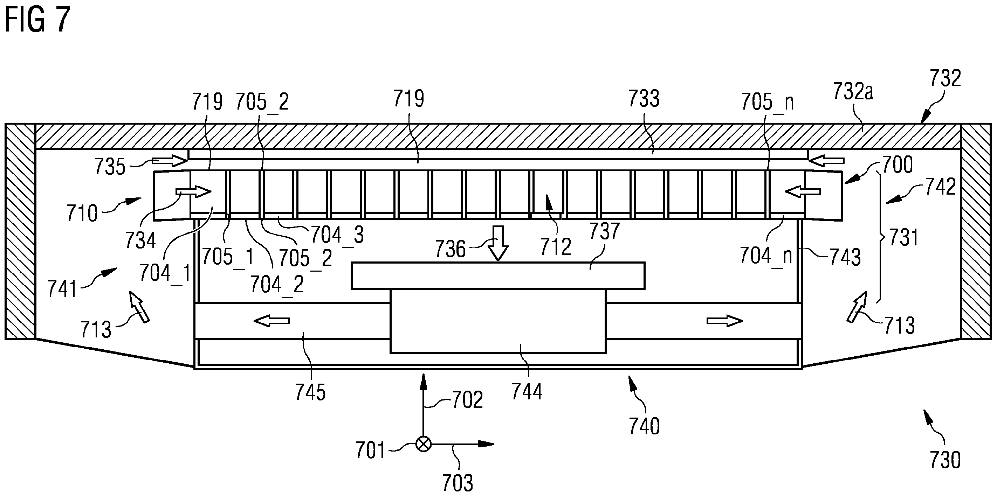

**Fig. 7** illustrates in a cross-sectional view a permanent magnet synchronous machine 730 according to an embodiment of the present invention. The machine 730 comprises a stator 731 which may for example be formed by plural stator segments as for example illustrated in Figs. 1, 2, 3, 4, 5, 6, in order to form a stator in the entire circumference.

Furthermore, the electrical machine 730 comprises a rotor 732, which is rotatably supported relative to the stator 731. The rotor 732 is an outer rotor. The rotor 732 comprises plural permanent magnets 733 on rotor house 732a. In the cross-sectional view of Fig. 7 only one first coil portion 710 is visible. The arrow 734 indicates a streaming direction of a cooling fluid 713 within the inter coil cooling passage 712 between two coil portions 710 and 711 (not illustrated) which are arranged within one slot of the stator or stator segment.

An arrow 735 indicates a flow direction of the cooling fluid 713 entering the air gap 719 between the stator 731 and the rotor 732. The rotor has plural permanent magnets 733 mounted, which face the radially outer surface of the stator 731 wherein the air gap 719 is formed between the permanent magnet(s) 733 and the radially outer surface of the stator 731.

The Fig. 7 thereby illustrates the cooling fluid flow geometry for the parallel and the A-shape configurations of the coil portions 710, 711 (compare also Figs. 1 and 2). The cooling fluid entering the inter coil cooling passage 712 in the axial direction may then partly flow through the radial air ducts 705_1, 705_2, 705_n in order to exit the lamination stacks 704_1, 704_2 ... 704_n radially inwards according to the flow direction 736 in order to be guided to a heat exchanger 737.

The permanent magnet machine or the stator or stator segment 700, 731 comprises a cooling fluid driving and guiding system 740 which provides a closed cooling fluid loop. The cooling fluid driving and guiding system 740 adapted to guide the cooling fluid 713 from at least one axial end 741, 742 in particular from both axial ends 741, 742 of the stator 731 into each inter-winding cooling fluid passage 712 and also into a region 719 radially outwards from the protruding end of the teeth, where the air gap 719 between the stator 731 and the rotor 732 is formed.

Further, the cooling fluid driving and guiding system 740 is adapted to allow the cooling fluid 713 to pass axially through each inter coil cooling fluid passage 712 and partly through the radially extending cooling fluid ducts 705_1, ... 705_n. The system 740 is further adapted to allow the cooling fluid 713 to pass axially through the air gap 719 and partly through the radially extending cooling fluid ducts 705_1, ... 705_n.

In Fig. 7 also a support frame 743 is sketched in a very schematic manner. The support frame 743 is connected to respective yoke portions of the lamination stacks 704_1, ... 704_n for supporting and fixing the plural lamination stacks.

As can be appreciated from Fig. 7 applying the parallel and the A-shape configurations of the first and second coil portions, a first cooling fluid portion 735 is partially guided to and through the air gap 719 and parts of the first cooling fluid portion 735 are guided through the radially extending cooling fluid ducts 705_1, ... 705_n, in particular radially inwards. Further, a second cooling fluid portion 734 is guided to and partially through the inter-winding cooling fluid passage 712, wherein parts of the second cooling fluid portion are guided through the radially extending cooling fluid ducts 705_1, ... 705_n, in particular radially inwards (down in Fig. 7).

The heat exchanger 737 is configured to partially absorb the heat from the cooling fluid 713 flowing out of the radially extending cooling fluid ducts 705_1, ... 705_n, in particular radially inwards.

The cooling driving system 740 may for example comprise a fan 744 which is configured to draw or press cooling air through the heat exchanger 737. The cooling fluid driving system 740 may further comprise piping sections 745 for example for guiding the cooling fluid to the axial ends 741, 742 and from there into the inter coil cooling passage 712 as well as to the air gap 719.

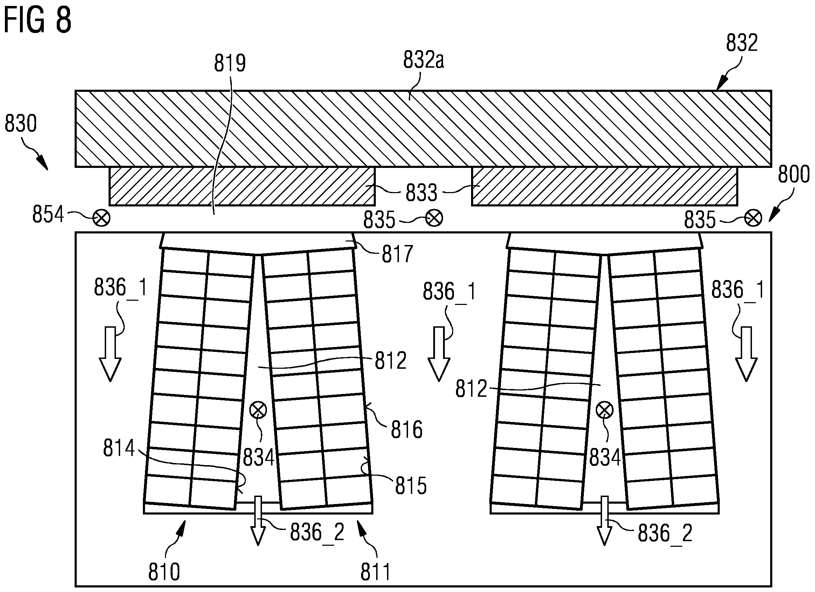

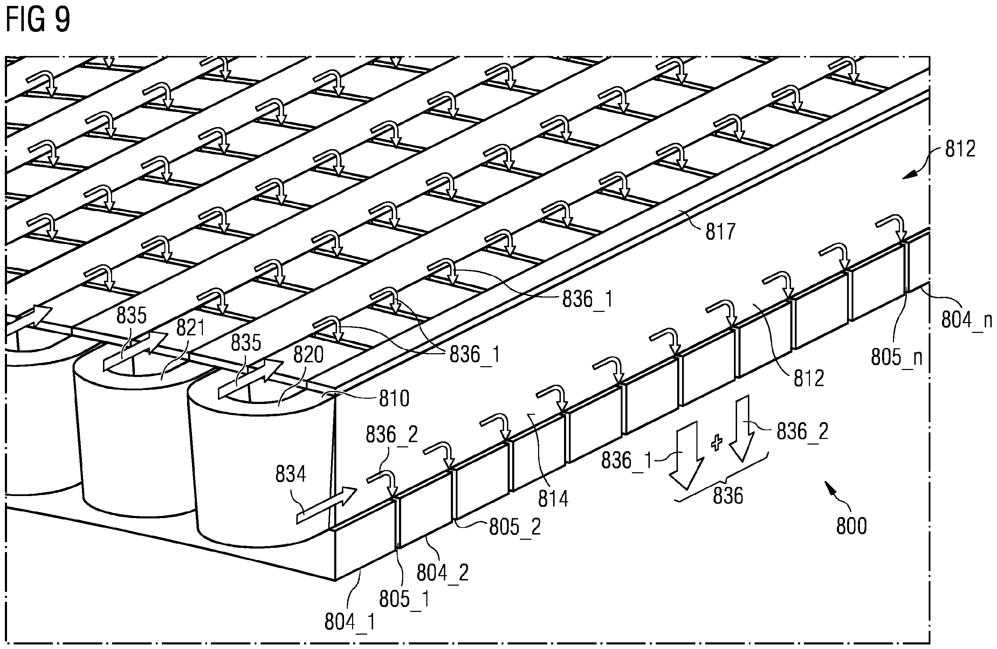

**Figs. 8** **and** **9** further illustrate embodiments of an electrical machine 830 according to embodiments of the present invention for illustrating in more detail the flow passages of cooling fluid. Cooling fluid is introduced into the inter coil cooling passages 812 according to the axial direction indicated by arrow 834 and is further also introduced into the air gap 819 indicated by arrow 835 indicating flow direction of the cooling fluid. From the air gap 819 the cooling fluid exits according to direction 836_1 through the radially extending cooling ducts 805_1, 805_2, 805_n. Furthermore, from or out of the inter coil cooling ducts 812 the cooling air exits radially inwards according to the flow direction 836_2 again through the radially extending cooling air ducts 805_1, ... 805_n. The exiting portions 836_1, 836_2 then enter as cooling air 836 a not illustrated heat exchanger and cooling fluid driving system 740.

The flow direction paths illustrated in Figs. 8 and 9 apply to the A-shape configuration as well as to the parallel configuration at least in a similar manner of the first and second coil portions 810, 811.

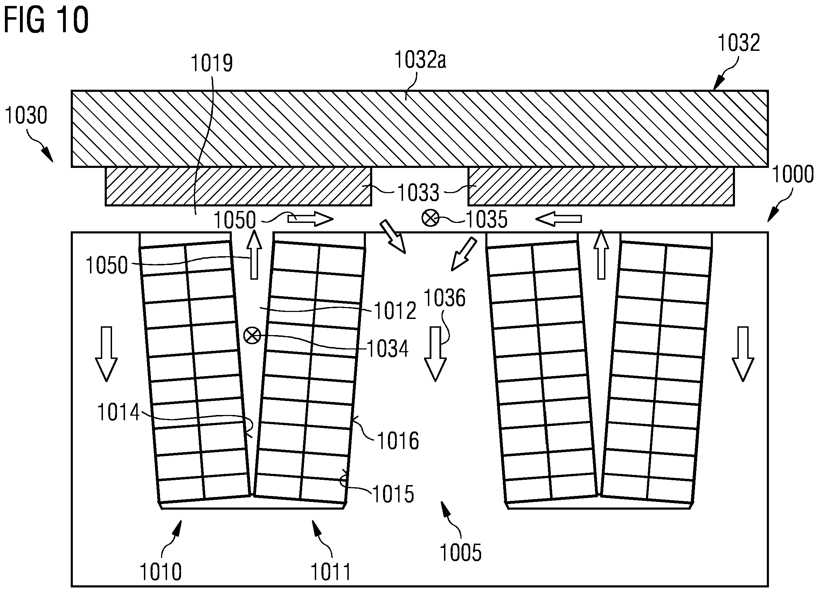

**Figs. 10****,** **11** **and** **12** illustrate respective electrical machines 1030 comprising stator segments 1000 for the V-shape configuration of the first and second coil portions. Herein, the flow path of the cooling fluid is different from the parallel and A-shape configuration. Similarly to the parallel and A-shape configuration, cooling air is introduced into the inter coil cooling passage 1012 in the axial direction according to flow direction 1034. Furthermore, also cooling fluid is introduced into the air gap 1019 in the axial direction as indicated by the flow direction 1035. Different however from the flow path configuration illustrated for the parallel and the A-shape configuration, the cooling fluid exits the inter coil cooling passage 1012 radially outwards according to cooling flow direction 1050 in order to reach the air gap 1019, where it may stream partially axially and/or partially circumferentially. Then the cooling fluid exits the air gap 1019 radially inwards according to flow direction 1036 (through radial cooling ducts), wherein the cooling fluid according to flow direction 1036 comprises cooling fluid which has been passed through the inter coil cooling passage 1012 as well as partly through the air gap 1019.

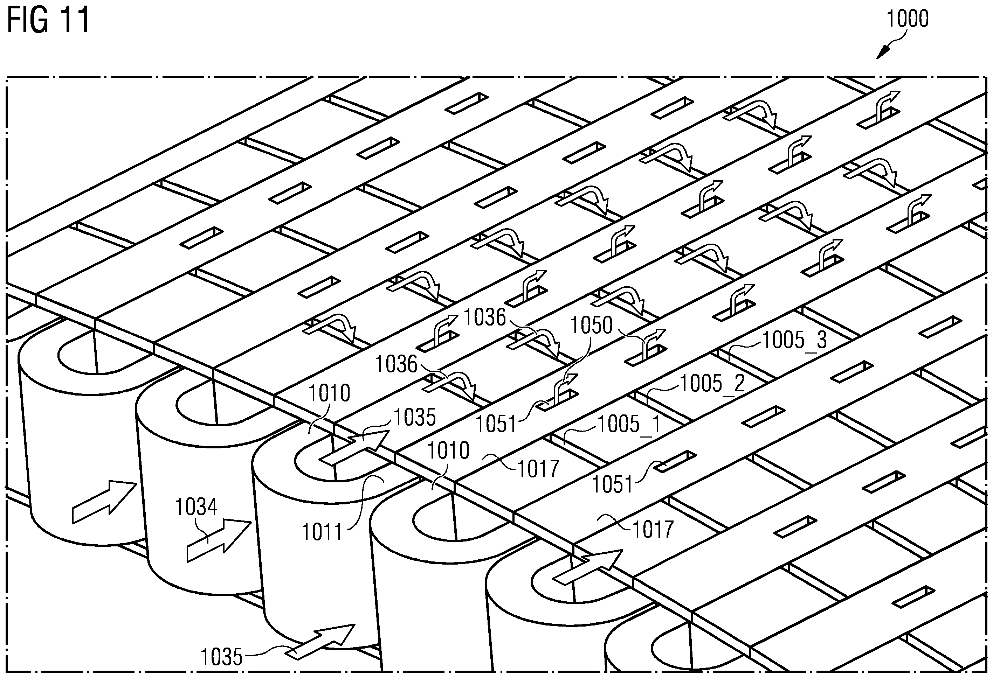

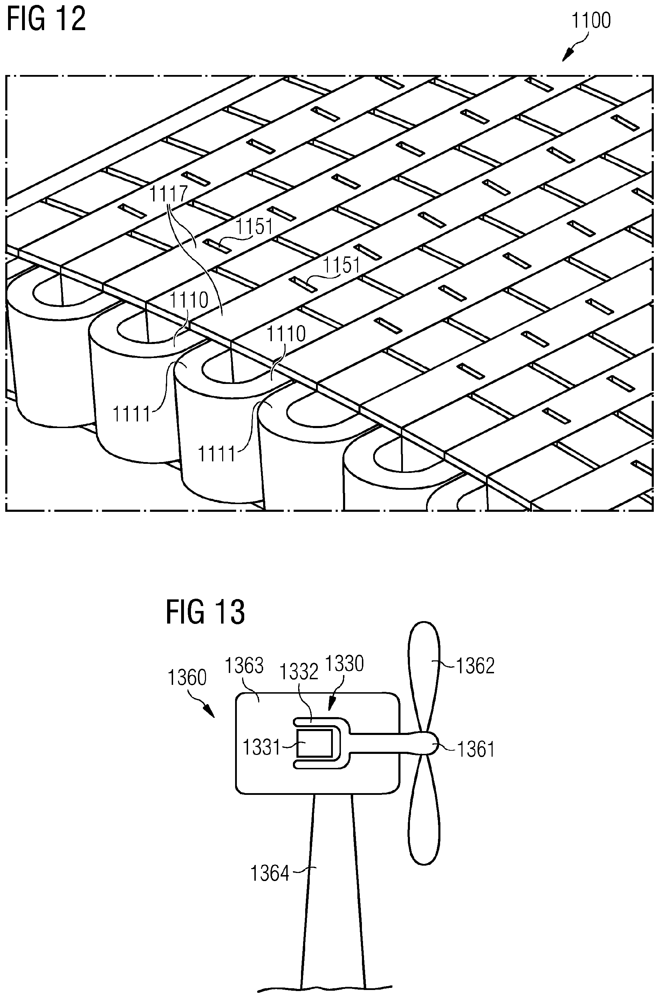

Figs. 11 and 12 illustrate for the V-shape configuration (as is illustrated in Fig. 10 for example) cover openings 1051, 1151, respectively in the coil portion cover 1017, 1117, respectively. The cover opening 1051 in Fig. 11 is formed by an axially extending slit while the cover opening 1151 illustrated in Fig. 12 is formed by a circumferentially extending slit. Other cover opening shapes are possible. The cover openings 1051, 1151 allow the cooling fluid to exit the inter coil cooling passage 1012 radially outwards to join cooling fluid being within the air gap 1019 (not illustrated in Figs. 11 and 12).

For the V-shape configuration of the first and second coil portions, a first cooling fluid portion 1035 is guided to and partly through the air gap 1019 and parts of the first cooling fluid portion are guided through the radially extending cooling fluid ducts 1005 radially inwards for example according to fluid flow direction 1036 illustrated in Fig. 10. A second cooling fluid portion 1034 is guided to and partly through the inter-winding cooling fluid passage 1012 and parts of the second cooling fluid portion are guided to the air gap 1019 and from there through the radially extending cooling fluid ducts 1005 in particular radially inwards.

Radially extending cooling fluid ducts are present in the embodiments illustrated in Fig. 1, 2, 3, but are obscured due to the cross-sectional illustration.

**Fig. 13** schematically illustrates a wind turbine according to an embodiment of the present invention. The wind turbine 1360 comprises a permanent magnet synchronous machine 1330 according to an embodiment of the present invention as well as a hub 1361 with plural rotor blades 1362, wherein the hub 1361 is coupled to the rotor 1332 of the permanent magnet synchronous machine 1330 which further comprises the stator 1331. The generator 1330 is arranged within a nacelle 1363 which is mounted on top of a wind turbine tower 1364.

Embodiments of the present invention increase heat dissipation directly from the concentrated winding coils to cooling air flow. Thereby cooling air flow can enter the axial channel 112, 212, 312 between two coils in a slot. As a result, the cooling air is forced to have a direct contact surface with hotspot location. Thereby, it may result in a heat transfer directly from the windings to cooling air and thereby the winding temperature (hotspot) reduces significantly.

In Fig. 1 the two coils are placed parallel in the slot with a distance to make a gap between two coil sides. In Fig. 2, two coils are placed in the slot as an A-shape to make a gap between two coil sides. In Fig. 3 two coils are placed in the slot as V-shape to make a gap between two coil sides. The gap between the two coil sides can be maintained by means of temporary or permanent tube separation, that can be installed before, during or after the coil insertion.

In Fig. 1 the slot or inter coil cooling passage 112 is parallel. It is worth noting that in Fig. 1 the slot 109 is parallel while in Figs. 2 and 3 the slots 209, 309 are not parallel, the most appropriate design is based on the most optimal dimension.

As is illustrated in Fig. 7, the cooling method is based on forced air cooling. The cooling system can be either a closed air cooling loop and/or open loop (direct cooling). The cooling air or in general cooling fluid may enter the generator from the non drive and/or the drive end sides (representing axial ends of the stator) and after passing over the stator winding heads, it enters the axial gap between the rotor and the stator and then the channel between coils and then after it is distributed through the radial air ducts in the stator.

In the parallel and A-shape configuration (for example illustrated in Figs. 8 and 9), the air flow enters the axial channel between the two coil sides from the two axial ends and exits through the radial air duct, whereas in the V-shape configuration (see for example Figs. 10, 11, 12) the air flow enters the axial channel between the two coils from the two axial ends but exits through added gaps in the coil covers (also referred to as wedges) to join the main air cooling fluid in the air gap between the rotor and the stator. Finally, the air flow in the main air gap combined with the exhaust air flow from channels between two coils are distributed between a number of radially air ducts in the stator body (see for example Fig. 10). The Figs. 11 and 12 show a different shape of the air outlet flowing in channel between the two coils. The outlet area can be designed in axial or tangential direction. The size, number and distribution of the outlets 1051, 1151 can be flexible such as e.g. to have sufficient flow inside the duct to obtain optimal performance.

Simulations show that for the A-shape configuration the winding temperature (hotspot) is effectively reduced. The coil temperature reduction as achieved according to embodiments of the present invention may result in an increase of generator power for the same generator size, in particular for wind parks with high ambient temperature.

Furthermore, embodiments provide considerable impact and in particular advantages on winding insulation lifetime.

Embodiments of the present invention may provide one or more of the below listed features:
- Due to the larger contact area between the coils and cooling air, resulting in higher heat transfer, the higher cooling performance is achieved.
- The heat system may still be based on forced air cooling, therefore conventional cooling systems may be supported.

It should be noted that the term "comprising" does not exclude other elements or steps and "a" or "an" does not exclude a plurality. Also elements described in association with different embodiments may be combined. It should also be noted that reference signs in the claims should not be construed as limiting the scope of the claims.

## Claims

1. Stator (731) or stator segment (100, 200, 300) for a synchronous machine (730), in particular permanent magnet synchronous machine, comprising:
plural lamination stacks (704_1, 704_2, 704_n) each extending in a circumferential direction (103) and radial direction (102) and each being composed of sheets stacked in the axial direction (101), the lamination stacks being arranged spaced apart in the axial direction, each lamination stack including a yoke portion (106) and plural tooth portions (107) protruding in the radial direction (102), a slot portion (108) being formed between each pair of adjacent tooth portions (107),
wherein the slot portions of the plural lamination stacks are aligned in the circumferential direction (103) such that plural slots (109) extending in the axial direction are formed,
wherein axially (101) between at least one, in particular each, pair of adjacent lamination stacks (704_1, 704_2, 704_n) a radially (102) extending cooling fluid duct (405_1,..., 405_n) is formed;
stator coils (420, 421) arranged in the plural slots according to a concentrated winding topology such that a first coil portion (110), in particular of a first coil, and a second coil portion (111), in particular of a second coil, are arranged in each slot (109),
wherein the first and second coil portions (110, 111) are arranged in at least one, in particular in each, slot such as to provide an, in particular axially extending, inter coil cooling fluid passage (112), in particular circumferentially (103), between the two coil portions (110, 111) .

2. Stator or stator segment according to the preceding claim, wherein cooling fluid (113, 134), in particular axially, guided within the inter coil cooling fluid passage (112) comes into direct contact with axially extending first edges (114) of the first and second coil portions (110, 111) for absorbing heat.

3. Stator or stator segment according to the preceding claim, wherein the first and second coil portions (110, 111) are arranged in the slot such that the first edges (114) of the first and second coil portions (110, 111) partially delimiting the inter coil cooling fluid passage (112) are parallel or inclined relative to each other, in particular according to an A-shape or a V-shape.

4. Stator or stator segment according to any one of the preceding claims,
wherein the first and second coil portions (110, 111) have substantially rectangular cross-sectional shape,
wherein the first and second coil portions (110, 111) are substantially parallel to each other or inclined relative to each other, in particular according to an A-shape or a V-shape.

5. Stator or stator segment according to any one of the preceding claims, wherein the slot (109) has in cross-section a rectangular shape or a trapezoid shape, wherein edges (115) of the teeth (107) delimiting the slot (109) come in direct contact with axially extending second edges (116) of the first and second coil portions (110, 111).

6. Stator or stator segment according to any one of the preceding claims, further comprising:
an axially extending coil portion cover (117) arranged at edges of the first and second coil portions (110, 111) facing an air gap (119) between the stator (731) and a rotor (732) .

7. Stator or stator segment according to the preceding claim, wherein for the parallel and the A-shape configurations of the first and second coil portions (110, 111), the coil portion cover (117) prohibits passage of a cooling fluid through the coil portion cover, in order to avoid fluid communication between the inter coil cooling fluid passage (112) and the air gap (119).

8. Stator or stator segment according to claim 6,
wherein for the V-shape configuration of the first and second coil portions (310, 311), the coil portion cover (317) comprises cover openings (1051, 1151), in particular axially and/or circumferentially extending slits, allowing passage of a cooling fluid through the coil portion cover (1017, 1117), in order to allow fluid communication between the inter coil cooling fluid passage and the air gap and/or
wherein the cover openings (1051, 1151) have a relative axial spacing between 0.8 and 1.2 of a relative axial spacing of the radially extending cooling fluid ducts, in particular having an axial offset relative to the radially extending cooling fluid ducts being between 0.4 and 0.6 of the relative axial spacing of the radially extending cooling fluid ducts.

9. Stator or stator segment according to any one of the preceding claims, further comprising:
a support frame (743) connected to respective yoke portions (106) of the lamination stacks (104) for supporting and fixing the plural lamination stacks.

10. Stator or stator segment according to any one of the preceding claims, further comprising:
a cooling fluid driving and guiding system (740), in particular providing a closed cooling fluid loop, adapted:
to guide cooling fluid (713) from at least one axial end (741, 742), in particular form both axial ends, of the stator into each inter coil cooling fluid passage (712) and in particular into a region radially outwards from the protruding end of the teeth, where in particular an air gap (719) between the stator and a rotor is to be formed,
to allow the cooling fluid to pass axially through each inter coil cooling fluid passage (712) and partly through the radially extending cooling fluid ducts (705), and/or
to allow the cooling fluid to pass axially through the air gap (719) and partly through the radially extending cooling fluid ducts (705).

11. Stator or stator segment according to any one of the preceding claims,
wherein for the parallel and the A-shape configurations of the first and second coil portions:
a first cooling fluid portion (835) is guided to and partially through the air gap (819), parts (836_1) of the first cooling fluid portion are guided through the radially extending cooling fluid ducts, in particular radially inwards,
a second cooling fluid portion (834) is guided to and partially through the inter coil cooling fluid passage (812), parts (836_2) of the second cooling fluid portion are guided through the radially extending cooling fluid ducts, in particular radially inwards.

12. Stator or stator segment according to any one of the preceding claims,
wherein for the V-shape configurations of the first and second coil portions:
a first cooling fluid portion (1035) is guided to and partially through the air gap (1019), parts (1036) of the first cooling fluid portion are guided through the radially extending cooling fluid ducts, in particular radially inwards,
a second cooling fluid portion (1034) is guided to and partially through the inter coil cooling fluid passage (1012), parts (1050) of the second cooling fluid portion are guided to the air gap (1019) and from there through the radially extending cooling fluid ducts, in particular radially inwards.

13. Stator or stator segment according to any one of the preceding claims, which is configured for at least one of:
closed loop cooling, in which case it further comprises a heat exchanger (737), configured to partially absorb heat from the cooling fluid flowing out of the radially extending cooling fluid ducts (705), in particular radially inwards;
open loop cooling, in which case it further comprises cooling fluid piping configured to guide cooling fluid having absorbed heat from the stator to the environment.

14. Permanent magnet synchronous machine (730), comprising:
a stator (731) or plural stator segments (100) according to one of the preceding claims, to form a stator in the entire circumference;
a rotor (732), in particular radially outer rotor, rotatably supported relative to the stator and comprising plural permanent magnets;
wherein a circumferentially and axially extending radial air gap (719) is formed radially between the stator (731) and the rotor (732),
wherein in particular the inter coil cooling fluid passage (712) is in communication with the air gap (719) for the V-shape of the first and second coil portions or
wherein in particular the inter coil cooling fluid passage is not in communication with the air gap for the A-shape or the parallel configuration of the first and second coil portions.

15. Wind turbine (1360), comprising:
a permanent magnet synchronous machine (1330) according to the preceding claim;
a hub (1361) with plural rotor blades (1362), the hub being coupled to the rotor (1332) or the machine (1330).
